(19) Europäisches Patentamt
European Patent Office
Office européen des brevets

(11) Veröffentlichungsnummer: **0 224 441 B1**

(12) # EUROPÄISCHE PATENTSCHRIFT

(45) Veröffentlichungstag der Patentschrift: **20.06.90**

(51) Int. Cl.⁵: **A01N 47/36**
// (A01N47/36, 37:44, 37:42)

(21) Anmeldenummer: **86810501.6**

(22) Anmeldetag: **03.11.86**

(54) **Pflanzenwuchsregulierendes Mittel.**

(30) Priorität: **08.11.85 CH 4803/85**

(43) Veröffentlichungstag der Anmeldung:
**03.06.87 Patentblatt 87/23**

(45) Bekanntmachung des Hinweises auf die Patenterteilung:
**20.06.90 Patentblatt 90/25**

(84) Benannte Vertragsstaaten:
**BE CH DE FR GB IT LI NL**

(56) Entgegenhaltungen:
**EP-A- 0 126 713**

(73) Patentinhaber: **CIBA-GEIGY AG, Klybeckstrasse 141, CH-4002 Basel(CH)**

(72) Erfinder: **Seiler, Alfred, Dr., Schaffhauserstrasse 51, CH-4332 Stein(CH)**
Erfinder: **Kerber, Elmar, Dr., Steineggweg 14, D-7884 Rickenbach(DE)**

EP 0 224 441 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein synergistisch wirkendes Gemisch, welches den Pflanzenwuchs reguliert und aus zwei Wirkstoffkomponenten besteht, ein Mittel welches dieses Gemisch enthält sowie die Verwendung dieses Mittels zu Regulierung, vor allem Hemmung des Pflanzenwuchses.

Das erfindungsgemässe Mittel besteht aus einem Gemisch von zwei an sich bekannten Wirkstoffkomponenten. Beim ersten Wirkstoff handelt es sich um Cyclohexandioncarbonsäurederivate, welche mit herbizider und den Pflanzenwuchs regulierender Wirkung in der offengelegten Europäischen Patentanmeldung EP-A-126 713 beschrieben sind. Der zweite Wirkstoff ist ein Sulfonylharnstoff welchem bisher eher stark herbizide Eigenschaften zugeschrieben worden sind.

Solche Sulfonylharnstoffe sind in der Literatur in grosser Zahl beschrieben und zum Teil auch schon im Handel erhältlich. Wirkstoffe, die erfindungsgemäss verwendet werden, sind beispielsweise in folgenden Literaturstellen beschrieben: DE-A 2 715 786, EP-A 4 163, EP-A 7 687, EP-A 13 480, EP-A 23 141, EP-A 23 422, EP-A 30 139, EP-A 30 142, EP-A 35 893, EP 44 209 EP-A 44 211, EP-A 44 212, EP-A 44 213, EP-A 44 807, EP-A 44 808, EP-A 44 809, EP-A 48 143, EP-A 51 466, EP-A 57 546, EP-A 70 802, EP-A 72 347, EP-A 73 562, EP-A 79 683, EP-A 82 108 EP-A 83 975, EP-A 84 020, EP-A 84 224, EP-A 85 028, EP-A 85 476, EP-A 87 780, EP-A 95 925, EP-A 96 002, EP-A 96 593, EP-A 99 339, EP-A 102 925, EP-A 107 979, EP-A 117 014 EP-A 108 708 und EP-A 120 814.

Ueberraschenderweise vermag der Zusatz des Sulfonylharnstoffes die Pflanzenwuchs-regulierende respektive hemmende Wirkung der Cyclohexandion-carbonsäurederivate zu verändern und zu verbessern.

Das erfindungsgemäss den Pflanzenwuchs regulierende Mittel ist dadurch gekennzeichnet, dass es neben inerten Zutaten als Wirkstoffe

a) ein Cyclohexandioncarbonsäurederivat der Formel I

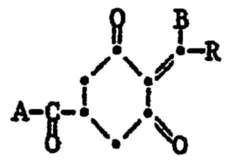

(I),

worin

A einen Rest $OR_2$ oder $NR_3R_4$,

B Hydroxyl, einen Rest $-NHOR_1$ oder ein Metall- oder Ammoniumsalz davon,

R $C_1$-$C_6$ Alkyl oder $C_3$-$C_6$ Cycloalkyl, unsubstituiert oder substituiert durch Halogen, $C_1$-$C_4$ Alkoxy oder $C_1$-$C_4$ Alkylthio,

$R_1$ $C_1$-$C_6$ Alkyl, $C_1$-$C_6$ Halogenalkyl, $C_3$-$C_6$ Alkenyl, $C_3$-$C_6$ Halogenalkenyl oder $C_3$-$C_6$ Alkinyl,

$R_2$, $R_3$ und $R_4$ unabhängig voneinander je Wasserstoff; $C_1$-$C_6$ Alkyl, $C_1$-$C_6$ Halogenalkyl, $C_2$-$C_{10}$ Alkoxyalkyl $C_2$-$C_{10}$ Alkylthioalkyl; $C_3$-$C_6$ Alkenyl, unsubstituiert oder substituiert durch Halogen, $C_1$-$C_4$ Alkoxy oder $C_1$-$C_4$ Alkylthio; $C_3$-$C_6$ Alkinyl; Phenyl oder Aryl-($C_1$-$C_6$)-alkyl, wobei der Phenylkern unsubstituiert oder durch Halogen, $C_1$-$C_4$ Alkyl, $C_1$-$C_4$ Alkoxy, $C_1$-$C_4$ Halogenalkyl, Nitro oder Cyan substituiert ist, eines von $R_3$ und $R_4$ auch Methoxy oder

$R_3$ und $R_4$ zusammen mit dem Stickstoffatom, an das sie gebunden sind, auch einen 5-6 gliedrigen, gesättigten Heterocyclus bilden, der im Ring ein Sauerstoff- oder ein weiteres Stickstoffatom enthalten kann, und

b) eine synergistisch wirksame Menge eines Sulfonylharnstoffes der Formel II

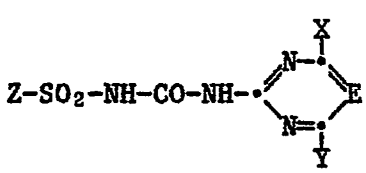

(II)

oder ein Salz davon enthält, worin

Z einen Rest

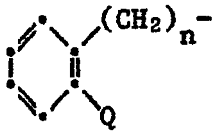 , 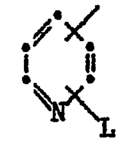 , 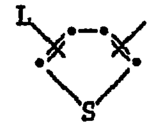 oder 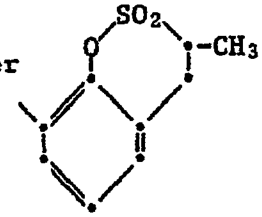

L Halogen, Nitro, $-SO_2N(CH_3)_2$, $C_1$–$C_5$-Alkoxycarbonyl, $C_1$–$C_5$-Alkyl, $C_1$–$C_5$-Alkoxy, $C_1$–$C_5$-Alkylthio oder $C_1$–$C_5$-Alkylsulfonyl,
Q Halogen, Nitro, $-SO_2N(CH_3)_2$, $-CO-R^1$, $-(A)_m-R^2$, Phenyl, Phenoxy, $C_1$–$C_5$-Alkyl, Halogenphenyl, Halogenphenoxy, $C_1$–$C_5$-Halogenalkoxy, $C_1$–$C_5$-Halogenalkylthio oder $C_1$–$C_5$-Halogenalkyl,
n die Zahl null oder eins,
E N oder CH,
X Methyl, Methoxy, Äthoxy, Difluormethoxy oder Cyclopropyl und
Y Chlor, Methyl, Methoxy, Difluormethoxy, Methylamino, Dimethylamino oder Äthoxy stehen, wobei
$R^1$ Wasserstoff, $C_1$–$C_5$-Alkyl, $C_1$–$C_5$-Alkoxy, $C_3$–$C_5$-Alkenyloxy oder $C_3$–$C_5$-Alkinyloxy,
A Sauerstoff, Schwefel, –SO–, $SO_2$– oder $-O-SO_2-$,
m die Zahl null oder eins und
$R^2$ $C_1$–$C_5$-Alkyl, $C_2$–$C_5$-Alkenyl, $C_2$–$C_5$-Alkinyl, $C_1$–$C_5$-Halogenalkyl, $C_2$–$C_7$-Alkoxyalkyl, $C_2$–$C_5$-Halogenalkenyl oder $C_2$-$C_5$-Halogenalkinyl bedeuten.

Die erfindungsgemässen Mittel besitzen die Eigenschaft, das vegetative Wachstum von Gräsern, Vegetationsmischungen und Unkräutern zu hemmen. Während bei einer totalen Vernichtung von Pflanzenbeständen die Abtragung des Bodens durch Wind und Niederschläge gefördert wird, führt der Einsatz der erfindungsgemässen Mittel zu einer sehr starken Wuchsreduktion, welche die Entstehung oder Erhaltung einer gleichmässigen, niedrigen Pflanzendecke bewirkt und so die Bodenerosion verhindert. In dieses Einsatzgebiet fällt insbesondere die Wachstumsreduktion bei Gräsern bei der Instandhaltung von Grasanpflanzungen, wie sie als Grünanlagen, Obstbaumkulturen, auf Flugplätzen, auf Industriegelände oder an Autostrassen, Eisenbahndämmen oder Uferböschungen von Gewässern angelegt werden. In all diesen Fällen ist normalerweise ein periodisches Schneiden des Rasens bzw. des Grasbewuchses erforderlich. Dies ist nicht nur im Hinblick auf Arbeitskräfte und Maschinen sehr aufwendig, sondern birgt im Verkehrsbereich erhebliche Gefahren für das betroffene Personal und die Verkehrsteilnehmer.

Es besteht daher besonders in den vorgenannten Bereichen ein ausgeprägtes Erfordernis, die zur Erhaltung und Verfestigung des Bodens notwendige Grasnarbe einerseits zu erhalten und zu pflegen, andererseits aber mit einfachen Massnahmen die Pflanzen während der gesamten Vegetationsperiode auf einer mittleren Wuchshöche zu erhalten.

Ueberraschendweise hat sich nun gezeigt, dass die erfindungsgemässen Mittel zur Hemmung des Wachstums von Gräsern wie auch von Unkräutern besonders gut geeignet sind. Die Mittel entfalten auch bei variablen Umweltbedingungen ihre Wirkung ausserordentlich rasch und behalten zugleich ihre Wirksamkeit über eine lange Zeitspanne. Die Mittel erweisen sich damit als überlegen gegenüber den Einzelkomponenten. Weitere Vorteile der Mittel sind der Einsatz kleinerer Aufwandmengen nebst günstiger Beeinflussung der Phytotoxizität, eine bessere Totalwirkung und ein breiteres Wirkungsspektrum. Die Wirkung erstreckt sich auf dicotyle wie monocotyle Pflanzen.

In den erfindungsgemässen Mitteln beträgt das Verhältnis von Cyclohexandioncarbonsäurederivat, Wirkstoffkomponente der Formel I und Sulfonylharnstoff, Wirkstoffkomponente der Formel II im allgemeinen 200:1 bis 1:1 bevorzugt 100:1 bis 10:1.

In der Regel werden Aufwandmengen verwendet, die den nachfolgend angegebenen entsprechen:
0,1 bis 5 kg Aktivsubstanz pro Hektar bevorzugt 0,1 bis 2 kg d.h. 100 g bis 4 kg/ha Wirkstoffkomponente der Formel I und 1 bis 500 g/ha Wirkstoffkomponente der Formel II.

Von den Cyclohexandion-carbonsäurederivaten der Formel I sind diejenigen bevorzugt, welche der Formel Ia entsprechen

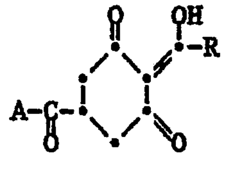 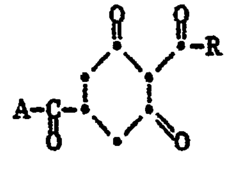 (Ia)

worin A und R die unter der Formel I gegebene Bedeutung haben, besonders diejenigen in denen A den Säurerest -OH oder einen Esterrest $-OR_2$ und R einen $C_3$-$C_6$-Cycloalkylrest bedeuten und vor allem die Verbindungen

1.1 4-(Cyclopropylcarbonyl)-cyclohexan-3,5-dion-1-carbonsäure-äthylester,
1.2 4-(Cyclopropylcarbonyl)-cyclohexan-3,5-dion-1-carbonsäure,
1.3 4-(Cyclopropylcarbonyl)-cyclohexan-3,5-dion-1-carbonsäuremethylester, und
1.4 4-(Cyclobutylcarbonyl)-cyclohexan-3,5-dion-1-carbonsäure.

Die Herstellung dieser Cyclohexandion-Carbonsäurederivate ist nicht Bestandteil dieser Erfindung, ihre Herstellung und Verwendung als Herbizide und zur Regulierung des Pflanzenwachstums ist in der offengelegten Europäischen Patentanmeldung 126 713 beschrieben.

Von den Sulfonylharnstoffen der Formel II sind Phenylsulfonylharnstoffe bevorzugt, welche der Formel IIa entsprechen

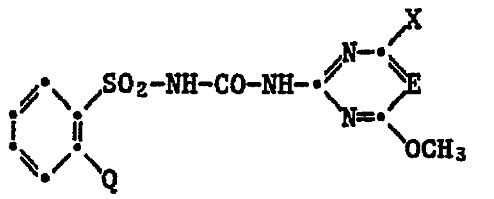 . (IIa)

worin
E N oder CH,
X Methyl, Methoxy oder Cyclopropyl,
Q Halogen, einen Rest $-SO_2N(CH_3)_2$, $-CO-R_1$ oder $-(A)_mR_2$,
$R_1$ Wasserstoff, $C_1$-$C_5$-Alkyl, $C_1$-$C_5$-Alkoxy, $C_3$-$C_5$-Alkenyloxy oder $C_3$-$C_5$-Alkinyloxy,
A Sauerstoff, Schwefel, -SO-, $-SO_2-$ oder $-OSO_2-$,
m Null oder eins,
$R_2$ $C_1$-$C_5$-Alkyl, $C_2$-$C_5$-Alkenyl, $C_2$-$C_5$-Alkinyl, $C_1$-$C_5$-Halogenalkyl, $C_2$-$C_7$-Alkoxyalkyl, $C_2$-$C_5$-Halogenalkenyl oder $C_2$-$C_5$-Halogenalkinyl,
bedeuten, besonders diejenigen in denen E für N steht und Q die oben gegebene Bedeutung hat oder die Verbindungen der Formel IIb

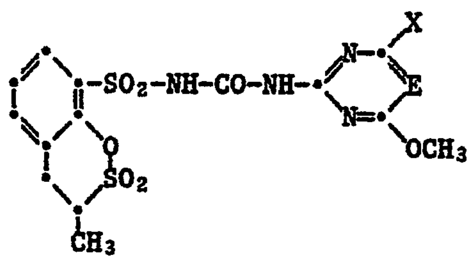 (IIb)

worin X die oben gegebene Bedeutung hat.

Besonders geeignete Sulfonylharnstoffe sind:
2.1 N-(2-β-Chloräthoxyphenylsulfonyl)-N'-(4-methoxy-6-methyl-1,3,5-triazin-2-yl)harnstoff,
2.2 N-[2-(2-Methoxyäthoxy)phenylsulfonyl]-N'-(4-methoxy-6-methyl-1,3,5,-triazin-2-yl)harnstoff,
2.3 N-(2-Methoxycarbonylphenylsulfonyl)-N'-(4,6-bis-difluormethoxypyrimidin-2-yl)harnstoff,
2.4 N-(2-β-Methoxyäthoxyphenylsulfonyl)-N'-(4,6-dimethoxy-1,3,5-triazin-2-yl)harnstoff,
2.5 N-(2-Methoxycarbonylphenylsulfonyl)-N'-(4-cyclopropyl-6-methylpyrimidin-2-yl)harnstoff,
2.6 N-(2,2-Dioxo-3-methyl-1,2-benzthioxin-8-yl-sulfonyl)-N'-(4-methoxy-6-methyl-pryrimidin-2-yl)harnstoff,
2.7 N-(2-Chlorophenylsulfonyl)-N'-(4-methoxy-6-methyl-1,3,5-triazin-2-yl)harnstoff,
2.8 N-(2-Methoxycarbonylphenylsulfonyl)-N'-(4-methoxy-6-methyl-1,3,5-triazin-2-yl)harnstoff,
2.9 N-(2-Methoxycarbonylphenylsulfonyl)-N'-(4,6-dimethyl-pyrimidin-2-yl)harnstoff,
2.10 N-(2-Methoxycarbonyl-thien-3-ylsulfonyl)-N'-(4-methoxy-6-methyl-1,3,5-triazin-2-yl)harnstoff,
2.11 N-(2-Äthoxycarbonylphenylsulfonyl)-N'-(4-chlor-6-methoxy-pyrimidin-2-yl)harnstoff, und
2.12 N-(2-Methoxycarbonylphenylsulfonyl)-N'-(4,6-dimethoxy-pyrimidin-2-yl)harnstoff.

Ein vorteilhaft wirkendes, erfindungsgemäß den Pflanzenwuchs regulierendes Mittel ist dadurch gekennzeichnet, daß es neben inerten Zutaten als wirksame Komponenten

a) ein Cyclohexandioncarbonsäurederivat der oben beschriebenen Formel Ia und
b) eine synergistisch wirksame Menge eines Phenylsulfonylharnstoffes der Formel IIa enthält.

Besonders günstig wirkende erfindungsgemäße Mittel enthalten neben inerten Zutaten ein Cyclohexandioncarbonsäurederivat der Formel Ia, worin A den Säurerest –OH, einen Esterrest $-OR_2$ und R einen $C_3$–$C_6$-Cycloalkylrest bedeuten und einen Phenylsulfonylharnstoff der Formel IIa, worin E Stick-

stoff bedeutet und Q die oben gegebene Bedeutung hat oder einen Phenylsulfonylharnstoff der Formel IIb worin E und X die oben gegebene Bedeutung haben.

In der Praxis haben Wirkstoffgemische eines der oben einzeln aufgeführten Cyclohexandion-carbonderivate und eines der oben einzeln aufgeführten Phenylsulfonylharnstoffe sehr gute Wirkung gezeigt, besonders aber die Kombination 4-(Cyclopropylcarbonyl)-cyclohexan-3,5-dion-1-carbonsäure-äthylester und N-(2-β-chloräthoxyphenylsulfonyl)-N'-(4-methoxy-6-methyl-1,3,5-triazin-2-yl)-harnstoff (Kombination von Verbindung No. 1.1 mit Verbindung No. 2.1).

Es wurde nun überraschend gefunden, dass Mittel, welche diese Wirkstoffe enthalten, sich vor allem dadurch auszeichnen, dass sie gezielt in den Metabolismus der Pflanzen eingreifen. Dieser gezielte Eingriff in die physiologischen Vorgänge der Pflanzenentwicklung macht das erfindungsgemässe Mittel für verschiedene pflanzenwachstumregulatorische Zwecke verwendbar, insbesondere für solche, die mit der Ertragssteigerung bei Nutzpflanzen, der Ernteerleichterung und der Arbeitseinsparung bei Massnahmen an Pflanzenkulturen im Zusammenhang stehen.

Für die Wirkungsweise von Pflanzenwachstumsregulatoren gilt nach der bisherigen Erfahrung, dass ein Wirkstoff eine oder auch mehrere verschiedenartige Wirkungen auf Pflanzen ausüben kann. Die Wirkungen der Stoffe hängen im wesentlichen ab von dem Zeitpunkt der Anwendung, bezogen auf das Entwicklungsstadium des Samens oder der Pflanze sowie von den auf die Pflanzen oder ihre Umgebung ausgebrachten Wirkstoffmengen und von der Art der Applikation. In jedem Fall sollen Wachstumsregulatoren die Kulturpflanzen in gewünschter Weise positiv beeinflussen.

Pflanzenwuchsregulierende Stoffe können zum Beispiel zur Hemmung des vegetativen Pflanzenwachstums eingesetzt werden. Eine derartige Wuchshemmung ist unter anderem bei Gräsern von wirtschaftlichem Interesse, denn dadurch kann z.B. die Häufigkeit der Grasschnitte in Ziergärten, Park- und Sportanlagen oder an Strassenrändern reduziert werden. Von Bedeutung ist auch die Hemmung des Wuchses von krautigen und holzigen Pflanzen an Strassenrändern und in der Nähe von Ueberlandleitungen oder ganz allgemein in Bereichen, in denen ein starker Bewuchs unerwünscht ist.

Wichtig ist auch die Anwendung von Wachstumsregulatoren zur Hemmung des Längenwachstums bei Getreide, denn durch eine Halmverkürzung wird die Gefahr des Umknickens ("Lagerns") der Pflanzen vor der Ernte verringert oder vollkommen beseitigt. Ausserdem können Wachstumsregulatoren bei Getreide eine Halmverstärkung hervorrufen, die ebenfalls dem Lagern entgegenwirkt.

Eine Hemmung des vegetativen Wachstums erlaubt bei vielen Kulturpflanzen eine dichtere Anpflanzung der Kultur, so dass ein Mehrertrag, bezogen auf die Bodenfläche, erzielt werden kann.

Ein weiterer Mechanismus der Ertragssteigerung mit Wachstumshemmern beruht darauf, dass die Nährstoffe in stärkerem Masse der Blüten- und Fruchtbildung zugute kommen, während das vegetative Wachstum eingeschränkt wird.

Mit Wachstumsregulatoren lässt sich häufig auch eine Förderung des vegetativen Wachstums erzielen. Dies ist von grossem Nutzen, wenn die vegetativen Pflanzenteile geerntet werden. Eine Förderung des vegetativen Wachstums kann aber auch gleichzeitig zu einer Förderung des generativen Wachstums führen, so dass z.B. mehr oder grössere Früchte zur Ausbildung kommen.

Ertragssteigerungen können in manchen Fällen auch durch einen Eingriff in den pflanzlichen Stoffwechsel erreicht werden, ohne dass sich Aenderungen des vegetativen Wachstums bemerkbar machen. Wachstumsregulatoren können ferner eine Veränderung der Zusammensetzung der Pflanzen bewirken, so dass eine bessere Qualität der Ernteprodukte herbeigeführt wird. So ist es beispielsweise möglich, den Gehalt an Zucker in Zuckerrüben , Zuckerrohr, Ananas sowie Zitrusfrüchten zu erhöhen oder Proteingehalt in Soja oder Getreide zu steigern.

Unter dem Einfluss von Wachstumsregulatoren kann er zur Ausbildung parthenokarper Früchte kommen. Ferner kann das Geschlecht der Blüten beeinflusst werden.

Mit Wachstumsregulatoren lässt sich auch die Produktion oder der Abfluss von sekundären Pflanzenstoffen positiv beeinflussen. Als Beispiel sei die Stimulierung des Latexflusses bei Gummibäumen genannt.

Während des Wachstums der Pflanze kann durch Einsatz von Wachstumsregulatoren auch die seitliche Verzweigung durch eine chemische Brechung der Apikaldominanz vermehrt werden. Daran besteht z.B. Interesse bei der Stecklingsvermehrung von Pflanzen. Es ist jedoch auch möglich, das Wachstum der Seitentriebe zu hemmen, z.B. um bei Tabakpflanzen nach der Dekapitierung die Ausbildung von Seitentrieben zu verhindern und damit das Blattwachstum zu fördern.

Unter dem Einfluss von Wachstumsregulatoren kann der Blattbestand von Pflanzen so gesteuert werden, dass ein Entblättern der Pflanzen zu einem gewünschten Zeitpunkt erreicht wird. Eine derartige Entlaubung ist von Interesse, um eine mechanische Beerntung z.B. bei Wein oder Baumwolle, zu erleichtern oder um die Transpiration zu einem Zeitpunkt herabzusetzen, an dem die Pflanze verpflanzt werden soll. Durch Einsatz von Wachstumsregulatoren lässt sich der vorzeitige Fruchtfall verhindern. Es ist jedoch auch möglich, den Fruchtfall, - zum Beispiel bei Obst -, im Sinne einer chemischen Ausdünnung bis zu einem bestimmten Ausmass zu fördern. Wachstumsregulatoren können auch dazu dienen, um bei Kulturpflanzen zum Zeitpunkt der Ernte die zum Ablösen der Früchte erforderliche Kraft zu vermindern, so dass eine mechanische Beerntung der Pflanzen ermöglicht, beziehungsweise eine manuelle Beerntung erleichtert wird.

Mit Wachstumsregulatoren lässt sich ferner eine Beschleunigung oder auch eine Verzögerung der

Reife des Erntegutes vor oder nach der Ernte erreichen. Dieses ist von besonderem Vorteil, weil sich dadurch eine optimale Anpassung an die Bedürfnisse des Marktes herbeiführen lässt. Weiterhin können Wachstumsregulatoren in manchen Fällen die Furchtausfärbung verbessern. Darüberhinaus kann mit Hilfe von Wachstumsregulatoren auch eine zeitliche Konzentrierung der Reife erzielt werden. Damit werden Voraussetzungen dafür geschaffen, dass z.B. Tabak, Tomaten oder Kaffee, eine vollständige mechanische oder manuelle Beerntung in nur einem Arbeitsgang vorgenommen werden kann.

Durch die Anwendung von Wachstumsregulatoren kann auch die Samen- oder Knospenruhr der Pflanzen, also die endogene Jahresrhythmik, beeinflusst werden, so dass die Pflanzen, wie z.B. Ananas oder Zierpflanzen in Gärtnereien, zu einem Zeitpunkt keimen, austreiben oder blühen, an dem sie normalerweise hierzu keine Bereitschaft zeigen.

Mit Wachstumsregulatoren kann auch erreicht werden, dass der Austrieb von Knospen oder die Keimung von Samen verzögert wird, z.B. um in frostgefährdeten Gebieten eine Schädigung durch Spätfröste zu vermeiden. Andererseits gelingt es, das Wurzelwachstum und/oder die Ausbildung von Sprösslingen zu stimulieren, so dass das Wachstum auf eine kürzere Zeitdauer beschränkt werden kann.

Wachstumsregulatoren können auch eine Halophilie bei den Kulturpflanzen erzeugen. Damit werden die Voraussetzungen dafür geschaffen, dass eine Kultivierung von Pflanzen auf salzhaltigen Böden durchgeführt werden kann.

Mit Wachstumsregulatoren kann auch eine Frost- und Trockenresistenz bei Pflanzen induziert werden.

Unter dem Einfluss von Wachstumsregulatoren kann das Altern (die Seneszenz) von Pflanzen oder Pflanzenteilen gehemmt respektive verzögert werden. Eine solche Wirkung kann von hohem wirtschaftlichem Interesse sein, dadurch, dass bei behandelten Pflanzenteilen oder ganzen Pflanzen wie Obst, Beeren, Gemüse, Salat oder Zierpflanzen deren Lagerfähigkeit nach der Ernte verbessert oder verlängert werden kann. Ebenso kann durch Behandlung von Kulturpflanzen über eine Verlängerung der Phase photosynthetischer Aktivität eine beachtliche Ertragssteigerung erzielt werden.

Ein weiteres wichtiges Anwendungsgebiet für Wuchshemmer ist deren Einsatz zur Hemmung eines übermässigen Wachstums bei tropischen Bodenbedeckungspflanzen, den sogenannten Cover crops. In tropischen und subtropischen Monokulturen, wie z.B. in Palmplantagen, Baumwoll-, Maisfeldern usw. werden neben den eigentlichen Kulturpflanzen oftmals Bodenbedeckungspflanzen, insbesondere Leguminosenarten angepflanzt, die zur Erhaltung oder Steigerung der Bodenqualität (Verhinderung der Austrocknung, Versorgung mit Stickstoff) und zur Verhinderung von Erosion (Abtragung durch Wind und Wasser) dienen. Durch Applikation der erfindungsgemässen Wirkstoffe kann nunmehr das Wachstum dieser Cover crops kontrolliert und somit die Wuchshöhe dieser Bodenbedeckungspflanzen auf einem niedrigen Niveau gehalten werden, so dass ein gesundes Gedeihen der Kulturpflanzen und die Aufrechterhaltung einer günstigen Bodenbeschaffenheit gewährleistet ist.

Als Kulturpflanzen gelten im Rahmen vorliegender Erfindung alle Pflanzen, die in irgendeiner Form Ertragsstoffe, wie Samen, Wurzeln, Stengel, Knollen, Blätter, Blüten, ferner Inhaltsstoffe, wie Oele, Zucker, Stärke, Eiweiss usw., produzieren und zu diesem Zweck angebaut werden. Zu diesen Pflanzen gehören beispielsweise sämtliche Getreidearten, wie Weizen, Roggen, Gerste und Hafer, daneben vor allem Reis, Kulturhirse, Mais, Baumwolle, Zuckerrüben, Zuckerrohr, Soja, Bohnen und Erbsen.

Die erfindungsgemässen Gemische der Wirkstoffkomponenten werden in unveränderter Form oder vozugsweise zusammen mit den in der Formulierungstechnik üblichen Hilfsmitteln eingesetzt und werden daher z.B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen d.h. die den Wirkstoff der Formeln I und II und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Di-octylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxydiertes Kokossnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B.

Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffgemisches nichtionogene, kation-und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sogenannte wasserlösliche Seifen wie wasserlösliche synthetische oberflächenaktive Verbindungen sein.

Als Seifen sind z.B. die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Koskosnuss- oder Talgöl gewonnen werden können. Ferner sind auch die Fettsäure-methyl-taurin-salze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxyd-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnapthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxyd-Adduktes oder Phospholipide in Frage.

Als nichtionisches Tensid kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykolüthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 1000 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglycoläther, Polypropylen-Polyäthylenoxyaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Poyloxyäthylensorbitantrioleat in Betracht.

Bei den kationischen Tensiden handelt es sich vor allem um quartäre Ammoniumsalzue, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi-(2-chloräthyl)-äthylammoniumbromid.

Die in der Formulierungstechnik gebräuchlichen Tenside sind u.a. in folgenden Publikationen beschrieben:

"Mc Cutcheon's Detergents and Emulsifiers Annual" MC Publishing Corp., Ridgewood, New Jersey, 1979

J. and M. Ash, "Encyclopedia of Surfactants" Vol. I-III, Chemical Publishing Co., Inc. New York, 1980-81

H. Stache "Tensid Taschenbuch", 2. Auflage, C. Hanser Verlag, München und Wien 1981.

Die erfindungsgemässen Zubereitungen enthalten in der Regel 0,1 bis 95 %, insbesondere 0,1 bis 80 % der erfindungsgemässen Wirkstoffkombination neben 1 bis 99,9 % eines festen oder flüssigen Zusatzstoffes und/oder 0 bis 25%, insbesondere 0,1 bis 25% eines Tensides.

Insbesondere setzten sich bevorzugte Formulierungen folgendermassen zusammen: (% = Gewichtsprozent).

Emulgierbare Konzentrate

Wirkstoffgemisch: 1 bis 20 %, bevorzugt 5 bis 10 %
oberflächenaktives Mittel: 5 bis 30% , bevorzugt 10 bis 20 %
flüssiges Trägermittel: 50 bis 94 % vorzugsweise 70 bis 85%

Stäube

Wirkstoffgemisch: 0,1 bis 10 %, vorzugsweise 0,1 bis 1 %
festes Trägermittel: 99,9 bis 90%, vorzugsweise 99,9 bis 90 %.

Suspension-Konzentrate

Wirkstoffgemisch: 5 bis 75 %, vorzugsweise 10 bis 50 %
Wasser: 94 bis 25 %, vorzugsweise 90 bis 30%
oberflächenaktives Mittel: 1 bis 40 %, vorzugsweise 2 bis 30 %.

Benetzbare Pulver

Wirkstoffgemisch: 0,5 bis 90 %, vorzugsweise 1 bis 80 %
oberflächenaktives Mittel: 0,5 bis 20 %, vorzugsweise 10 bis 20 %
flüssiges Trägermittel: 5 bis 95 %, vorzugsweise 15 bis 90 %

Granulate

Wirkstoffgemisch: 0,5 bis 30 %, vorzugsweise 3 bis 15 %
festes Trägermittel: 99,5 bis 70 %, vorzugsweise 99 bis 85 %.

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden. Die Aufwandmengen betragen in der Regel 0,01 bis 10 kg/ha, vorzugsweise 0,025 bis 5 kg AS/ha.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Beispiel 1:

Formulierungsbeispiele für das erfindungsgemässe Mittel

| a) <u>Spritzpulver</u> | a) | b) | c) |
|---|---|---|---|
| Wirkstoffgemisch bestehend aus 1000 Teilen der Verbindung 1.1 und 10 Teilen der Verbindung 2.1 oder 50 Teilen der Verbindung 2.4 | 20 % | 60 % | 0,5 % |
| Na-Ligninsulfonat | 5 % | 5 % | 5 % |
| Na-Laurylsulfat | 3 % | --- | --- |
| Na-Diisobutylnapthylinsulfonat | --- | 6 % | 5 % |
| Octylphenolpolyäthylenglykoläther (7-8 mol AeO) | --- | 2 % | 2 % |
| Hochdisperse Kieselsäure | 5 % | 27 % | 27 % |
| Kaolin | 67 % | --- | --- |
| Natriumchlorid | --- | --- | 60,5 % |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| b) <u>Emulsion-Konzentrat</u> | a) | b) |
|---|---|---|
| Wirkstoffgemisch bestehend aus<br>1000 Teilen der Verbindung 1.1<br>und 10 Teilen der Verbindung 2.1<br>oder 50 Teilen der Verbindung 2.4 | 10 % | 1 % |
| Octylphenolpolyäthylenglykoläther (4-5 mol AeO) | 3 % | 3 % |
| Ca-Dodecylbenzolsulfonat | 3 % | 3 % |
| Ricinusölpolyglykoläther (36 mol AeO) | 4 % | 4 % |
| Cyclohexanon | 30 % | 10 % |
| Xylolgemisch | 50 % | 79 % |

Aus diesem Konzentrat können durch Verdünnen mit Wasser Emulsionen jeder gewünschten Konzentration hergestellt werden.

| c) <u>Stäubemittel</u> | a) | b) |
|---|---|---|
| Wirkstoffgemisch bestehend aus<br>1000 Teilen der Verbindung 1.1<br>und 10 Teilen der Verbindung 2.1<br>oder 50 Teilen der Verbindung 2.4 | 0,1 % | 1 % |
| Talkum | 99,9 % | --- |
| Kaolin | --- | 99 % |

Man erhält anwendungsfertige Stäubemittel, indem der Wirkstoff mit dem Träger vermischt und auf einer geeigneten Mühle vermahlen wird.

| d) <u>Extruder-Granulat</u> | a) | b) |
|---|---|---|
| Wirkstoffgemisch bestehend aus<br>1000 Teilen der Verbindung 1.1<br>und 10 Teilen der Verbindung 2.1<br>oder 50 Teilen der Verbindung 2.4 | 10 % | 1 % |
| Na-Ligninsulfonat | 2 % | 2 % |
| Carboxymethylcellulose | 1 % | 1 % |
| Kaolin | 87 % | 96 % |

Der Wirkstoff wird mit den Zusatzstoffen vermischt, vermahlen und mit Wasser angefeuchtet. Dieses Gemisch wird extrudiert und anschliessend im Luftstrom getrocknet.

e) Umhüllungs-Granulat

| | |
|---|---|
| Wirkstoffgemisch bestehend aus 1000 Teilen der Verbindung 1.1 und 10 Teilen der Verbindung 2.1 oder 50 Teilen der Verbindung 2.4 | 3 % |
| Polyäthylenglykol (MG 200) | 3 % |
| Kaolin | 94 % |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

| f) Suspensions-Konzentrat | a) | b) |
|---|---|---|
| Wirkstoffgemisch bestehend aus 1000 Teilen der Verbindung 1.1 und 10 Teilen der Verbindung 2.1 oder 50 Teilen der Verbindung 2.4 | 40 % | 5 % |
| Aethylenglykol | 10 % | 10 % |
| Nonylphenolpolyäthylenglykoläther (15 mol AeO) | 6 % | 1 % |
| Na-Ligninsulfonat | 10 % | 5 % |
| Carboxymethylcellulose | 1 % | 1 % |
| 37%ige wässrige Formaldehyd-Lösung | 0,2 % | 0,2 % |
| Silikonöl in Form einer 75%igen wässrigen Emulsion | 0,8 % | 0,8 % |
| Wasser | 32 % | 77 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Biologische Beispiele:

Beispiel 1: Wuchshemmungs-Versuch im Gewächshaus

Im Gewächshaus werden in Kunststofftöpfen von 12 cm Durchmesser, welche mit gesiebter sterilisierten Landerde gefüllt sind die Pflanzen Avena sative, Lolium perenne, Solanum lycopersicum, Sinapis alba, Stellaria media und Phaseolus vulgaris angesät. Die Pflanzen werden unter den für ein gutes Wachstum erforderlichen Bedingungen von Belichtung, Temperatur, Feuchtigkeit und Wassergaben gehalten. 11-14 Tage nach der Ansaat werden die jungen Pflanzen dann mit der zu prüfenden Substanz gespritzt. Die Applikation erfolgt in einer Dosierung von umgerechnet 4 kg Wirkstoffgemisch und 500 l Wasser pro Hektar. Die Pflanzen werden weiterhin im Gewächshaus gehalten und beobachtet. Der Versuch wird 14 Tage nach der Behandlung ausgewertet und die Pflanzen werden auf Wachstum im Vergleich zu unbehandelten Pflanzen (= 100 % Wachstum), Grünfärbung, Chlorose, Nekrose und Bestockung kontrolliert.
Die geprüften Mischungen zeigten deutliche Hemmwirkung.

Beispiel 2: Wuchshemmung bei Getreide

In Kunststofftöpfen mit sterilisierter Erde wurden die Getreidearten Hordeum vulgare (Sommergerste) und Triticum (Sommerweizen) im Gewächshaus angesät und nach Bedarf bewässert. Die Sprösslinge wurden ca. 21 Tage nach der Aussaat mit der wässrigen Spritzbrühe des erfindungsgemässen Wirkstoffgemisches besprüht. Die Wirkstoffmenge betrug umgerechnet bis zu 3 kg Aktivsubstanz pro Hektar. 28 Tage nach Applikation wurde das Wachstum des Getreides beurteilt. Hierbei konnte festgestellt werden, dass Getreidepflanzen, die mit - dem erfindungsgemässen Wirkstoffgemisch behandelt worden waren, im Vergleich zu unbehandelten Kontrollpflanzen eine starke Wuchsreduktion aufweisen. Es wurden Zuwachsraten von wengier als 10 % festgestellt.

Beispiel 3: Wuchshemmung bei Gräsern und Klee

In Kunststoffschalen mit Erd-Torf-Sand-Gemisch (6:3:1) wurden die Gräser Lolium perenne, Poa pratensis, Festuca ovina, Dactylis glomerata, Festuca rubra, Agropyron repens, Bromus inermis, Cynosurus cristatus, sowie zwei Kleearten im Gewächshaus angesät und nach Bedarf bewässert. Die aufgelaufenen Gräser wurden wöchentlich bis auf 4 cm Höhe zurückgeschnitten und ca. 40 Tage nach der Aussaat und einen Tag nach dem letzten Schnitt mit der wässrigen Spritzbrühe des Wirkstoffes der Formel I, des Wirkstoffes der Formel II und einer Mischung beider Komponenten besprüht. Die Wirkstoffmenge betrug umgerechnet 1000 g Wirkstoff der Formel I, 10 g bzw. 50 g der Formel II und 1000 + 10 g bzw. 1000 + 50 g Mischung pro Hektar. 14-49 Tage nach Applikation wurde das Wachstum der Gräser beurteilt, dabei zeigte es sich, dass die erfindungsgemässen Wirkstoffe und Kombinationen eine merkliche Wuchshemmung bewirkten. Besonders deutliche Wuchshemmung wurde mit den Gemischen bewirkt. Die Hemmwirkung der Verbindungen 1.1 und 2.1 allein und im Gemisch wird unten verglichen.

Ein synergistischer Effekt liegt dann vor, wenn die wuchshemmende Wirkung der Wirkstoffkombination I + II grösser ist als die Summe auf der Wirkung der einzeln applizierten Wirkstoffe.

Das zu erwartende Pflanzenwachstum E für eine gegebene Kombination zweier Herbizide kann (vgl COLBY, S.R., "Calculating synergistic and antagonistic response of herbicide combinations", Weeds 15, Seiten 20-22, 1967) wie folgt berechnet werden:

$$E = X + \frac{Y \cdot (100-X)}{100}$$

Dabei bedeuten:

X = Prozent Wuchshemmung (im Vergleich zu unbehandelten Pflanzen) bei Behandlung mit einem Produkt I mit p kg Aufwandmenge pro Hektar,

Y = Prozent Wuchshemmung bei Behandlung mit einem Produkt II mit q kg Aufwandmenge pro Hektar

E = Erwartete Wuchshemmung in Prozent zu den Kontrollpflanzen nach Behandlung mit dem Gemisch I + II bei einer Aufwandmenge von p + q kg Wirkstoffmenge pro Hektar.

Ist der tatsächlich beobachtete Wert höher als der zu erwartende Wert E, so liegt Synergismus vor.

Der synergistische Effekt der Kombination der Wirkstoffe I und II wird in der folgenden Tabelle demonstriert.

Die Hemmwirkung im Vergleich zu unbehandelten Pflanzen (0 %) ist wie folgt.

| Auswertung, Tage nach Applikation | Verbindung 1.1 (X) Aufwandmenge 1000 g/ha | Verbindung 2.1 (Y) Aufwandmenge 10 g/ha | Gemisch 1.1+2.1 Aufwandmenge 1000+10 g/ha | nach Colby zu erwarten (E) |
|---|---|---|---|---|
| 14 | 58 % | 42 % | 81 % | 76 % |
| 21 | 56 % | 31 % | 81 % | 70 % |
| 29 | 29 % | 32 % | 76 % | 52 % |
| 35 | 20 % | 24 % | 56 % | 39 % |
| 42 | 12 % | 16 % | 40 % | 26 % |
| 49 | 0 % | 13 % | 27 % | 13 % |

| Auswertung, Tage nach Applikation | Verbindung 1.1 (X) Aufwandmenge 1000 g/ha | Verbindung 2.4 (Y) Aufwandmenge 50 g/ha | Gemisch 1.1+2.4 Aufwandmenge 1000+50 g/ha | nach Colby zu erwarten (E) |
|---|---|---|---|---|
| 14 | 59 % | 37 % | 73 % | 74 % |
| 21 | 59 % | 28 % | 78 % | 71 % |
| 29 | 24 % | 0 % | 53 % | 24 % |

Beispiel 4: Wuchshemmung bei tropischen Bodenbedecker-Pflanzen (Cover-Crops)

In Kunststoffschalen mit Erde-Torf-Gemisch (1:3) werden Testpflanzen der Sorte Psophocarpus palustris, Centrosema plumieri und Centrosema pubescens aus Stecklingen angezogen und nach Bedarf gewässert. Nach dem Anwurzeln werden die Pflänzchen in 11-cm-Töpfe umgetopft. Die weitere Anzucht der Pflanzen findet im Gewächshaus bei einer Tagestemperatur von 27°C und einer Nachttemperatur von 21°C, bei einer mittleren Lichtdauer von 14 h (6000 Lux) und einer Luftfeuchtigkeit von 70 % statt. Die Testpflanzen werden auf eine Höhe von ca. 15 cm zurückgeschnitten und 7 Tage nach dem Zurückschneiden mit einer Spritzbrühe des erfindungsgemässen Wirkstoffgemisches (umgerechnet 0,3 bzw. 3 kg Aktivsubstanz je Hektar) besprüht. 4 Wochen nach Applikation wird das Wachstum der behandelten Pflanzen im Vergleich zu gestutzten, aber unbehandelten Kontrollpflanzen verglichen. Hierbei kann festgestellt werden, dass Gemische der Verbindungen 1.1 bis 1.4 und 2.1 bis 2.12 eine deutliche Wuchshemmung der Bodenbedecker-Pflanzen auslösen.

**Patentansprüche**

1. Ein den Pflanzenwuchs regulierendes Mittel, dadurch gekennzeichnet, daß es neben inerten Zusätzen als Wirkstoffkomponenten

a) ein Cyclohexandioncarbonsäurederivat der Formel I

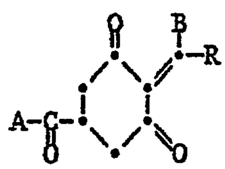

(I),

A einen Rest $OR_2$ oder $NR_3R_4$,
B Hydroxyl, einen Rest $-NHOR_1$ oder ein Metall- oder Ammoniumsalz davon,
R $C_1$–$C_6$-Alkyl oder $C_3$–$C_6$-Cycloalkyl, unsubstituiert oder substituiert durch Halogen, $C_1$–$C_4$-Alkoxy oder $C_1$–$C_4$-Alkylthio,
$R_1$ $C_1$–$C_6$-Alkyl, $C_1$–$C_6$-Halogenalkyl, $C_3$–$C_6$-Alkenyl, $C_3$–$C_6$-Halogenalkenyl oder $C_3$–$C_6$-Alkinyl,
$R_2$, $R_3$ und $R_4$ unabhängig voneinander je Wasserstoff; $C_1$–$C_6$-Alkyl, $C_1$–$C_6$-Halogenalkyl, $C_2$–$C_{10}$-Alkoxyalkyl, $C_2$–$C_{10}$-Alkylthioalkyl; $C_3$–$C_6$-Alkenyl, unsubstituiert oder substituiert durch Halogen, $C_1$–$C_4$-Alkoxy oder $C_1$–$C_4$-Alkylthio; $C_3$–$C_6$-Alkinyl; Phenyl oder Aryl-($C_1$–$C_6$)-alkyl, wobei der Phenylkern unsubstituiert oder durch Halogen, $C_1$–$C_4$-Alkyl, $C_1$–$C_4$-Alkoxy, $C_1$–$C_4$-Halogenalkyl, Nitro oder Cyan substituiert ist, eines von $R_3$ und $R_4$ auch Methoxy oder
$R_3$ und $R_4$ zusammen mit dem Stickstoffatom, an das sie gebunden sind, auch einen 5–6gliedrigen, gesättigten Heterocyclus bilden, der im Ring ein Sauerstoff- oder ein weiteres Stickstoffatom enthalten kann, und

b) eine synergistisch wirksame Menge eines Sulfonylharnstoffes der Formel II

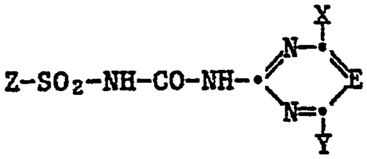

(II)

oder eines Salzes davon enthält, worin
Z einen Rest

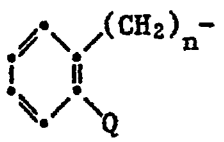 , 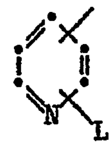 , 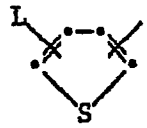 oder 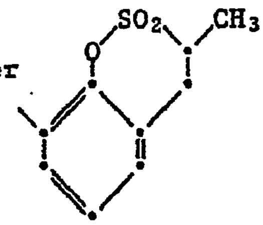

L Halogen, Nitro, $-SO_2N(CH_3)_2$, $C_1$–$C_5$-Alkoxycarbonyl, $C_1$–$C_5$-Alkyl, $C_1$–$C_5$-Alkoxy, $C_1$–$C_5$-Alkylthio oder $C_1$–$C_5$-Alkylsulfonyl,
Q Halogen, Nitro, $-SO_2N(CH_3)_2$, $-CO-R^1$, $-(A)_m-R^2$, Phenyl, Phenoxy, $C_1$–$C_5$-Alkyl, Halogenphenyl, Halogenphenoxy, $C_1$–$C_5$-Halogenalkoxy, $C_1$–$C_5$-Halogenalkylthio oder $C_1$–$C_5$-Halogenalkyl,
n die Zahl null oder eins,
E N oder CH,
X Methyl, Methoxy, Äthoxy, Difluormethoxy oder Cyclopropyl und
Y Chlor, Methyl, Methoxy, Difluormethoxy oder Methylamino, Dimethylamino, Äthoxy stehen, wobei
$R^1$ Wasserstoff, $C_1$–$C_5$-Alkyl, $C_1$–$C_5$-Alkoxy, $C_3$–$C_5$-Alkenyloxy oder $C_3$–$C_5$-Alkinyloxy,
A Sauerstoff, Schwefel, –SO–, $SO_2$– oder $-O-SO_2-$,
m die Zahl null oder eins und
$R^2$ $C_1$–$C_5$-Alkyl, $C_2$–$C_5$-Alkenyl, $C_2$–$C_5$-Alkinyl, $C_1$–$C_5$-Halogenalkyl, $C_2$–$C_7$-Alkoxyalkyl, $C_2$–$C_5$-Halogenalkenyl oder $C_2$–$C_5$-Halogenalkinyl bedeuten, enthält.

2. Mittel gemäß Anspruch 1, dadurch gekennzeichnet, daß es ein Cyclohexandion-carbonsäurederivat der Formel Ia

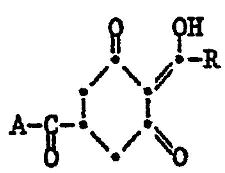 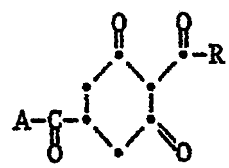 (Ia)

worin A und R die im Anspruch 1 gegebene Bedeutung haben, enthält.

3. Mittel gemäss Anspruch 1, dadurch gekennzeichnet, dass es ein Cyclohexandion-carbonsäurederivat der Formel Ia enthält

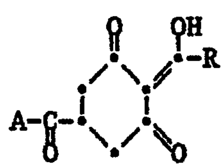 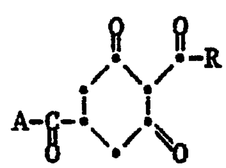 (Ia),

worin A den Säurerest -OH oder einen
Esterrest $-OR_2$ und $R_2$ die im Anspruch 1 gegebene Bedeutung hat und
R einen $C_3$-$C_6$-Cycloalkylrest bedeutet.

4. Mittel gemäss Anspruch 1, dadurch gekennzeichnet, dass es einen Phenylsulfonylharnstoff der Formel IIa enthält

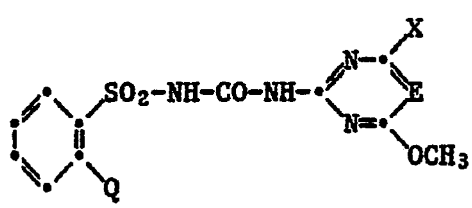 (IIa),

worin
E N oder CH,
X Methyl, Methoxy oder Cyclopropyl,
Q Halogen, $-SO_2N(CH_3)_2$, einen Rest $-CO-R_1$ oder $-(A)_mR_2$,
$R_1$ Wasserstoff, $C_1$-$C_5$-Alkyl, $C_1$-$C_5$-Alkoxy, $C_3$-$C_5$-Alkenyloxy oder $C_3$-$C_5$-Alkinyloxy,
A Sauerstoff, Schwefel, -SO-, $SO_2$- oder $-OSO_2$-,
m Null oder eins,

$R_2$ $C_1$-$C_5$-Alkyl, $C_2$-$C_5$-Alkenyl, $C_2$-$C_5$-Alkinyl, $C_1$-$C_5$-Halogenalkyl, $C_2$-$C_7$-Alkoxyalkyl, $C_2$-$C_5$-Halogenalkenyl oder $C_2$-$C_5$-Halogenalkinyl,
bedeuten.

5. Mittel gemäss Anspruch 1, dadurch gekennzeichnet, dass es einen Sulfonylharnstoff der Formel IIa

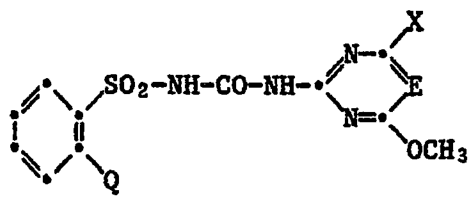

(IIa),

enthält, E für N steht und X Methyl, Methoxy oder die Cyclopropylgruppe, Q Halogen, Dimethylsulfamoyl $-SO_2N(CH_3)_2$, einen Rest $-CO-R_1$ oder $-(A)_mR_2$, $R_1$ Wasserstoff, $C_1$-$C_5$-Alkyl, $C_1$-$C_5$-Alkoxy, $C_3$-$C_5$-Alkenyloxy oder $C_3$-$C_5$-Alkinyloxy, m Null oder eins, $R_2$ $C_1$- $C_5$-Alkyl, $C_2$-$C_5$-Alkenyl, $C_2$-$C_5$-Alkinyl, $C_1$-$C_5$-Halogenalkyl, $C_2$-$C_7$-Alkoxyalkyl, $C_2$-$C_5$-Halogenalkenyl oder $C_2$-$C_5$-Halogenalkinyl bedeuten.

6. Mittel gemäss Anspruch 1, dadurch gekennzeichnet, dass der Sulfonylharnstoff der Formel IIb entspricht

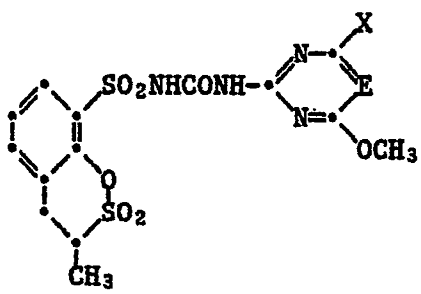

(IIb).

7. Mittel gemäss Anspruch 1, dadurch gekennzeichnet, dass es neben inerten Zutaten als Wirkstoffkomponenten

a) ein Cyclohexandion-carbonsäurederivat der Formel Ia

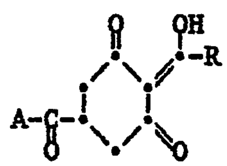

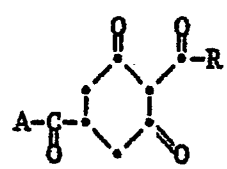

(Ia)

worin A und R die im Anspruch 1 gegebene Bedeutung haben und

b) eine synergistisch wirksame Menge eines Sulfonylharnstoffes der Formel IIa

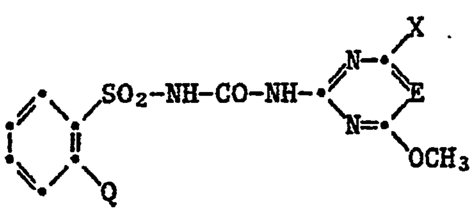

(IIa)

enthält, worin
E N oder CH,
X Methyl, Methoxy oder Cyclopropyl,
Q Halogen, $-SO_2N(CH_3)_2$, einen Rest $-CO-R_1$ oder $-(A)mR_2$,
$R_1$ Wasserstoff, $C_1$–$C_5$-Alkyl, $C_1$–$C_5$-Alkoxy, $C_3$–$C_5$-Alkenyloxy oder $C_3$–$C_5$-Alkinyloxy,
A Sauerstoff, Schwefel, $-SO-$, $-SO_2-$ oder $-OSO_2-$,
m Null oder eins,

$R_2$ $C_1$–$C_5$-Alkyl, $C_2$–$C_5$-Alkenyl, $C_2$–$C_5$-Alkinyl, $C_1$–$C_5$-Halogenalkyl, $C_2$–$C_7$-Alkoxyalkyl, $C_2$–$C_5$-Halogenalkenyl oder $C_2$–$C_5$-Halogenalkinyl bedeuten.

8. Mittel gemäß Anspruch 1, dadurch gekennzeichnet, daß es neben inerten Zutaten als Wirkstoffkomponenten

a) ein Cyclohexandion-carbonsäurederivat der Formel Ia

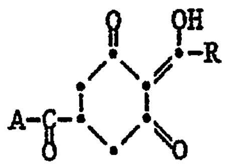 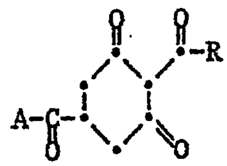 (Ia)

worin A den Säurerest –OH oder einen Esterrest –$OR_2$, wobei $R_2$ die in Anspruch 1 gegebene Bedeutung hat und R einen $C_3$–$C_6$-Cycloalkylrest bedeuten und

b) eine synergistisch wirksame Menge eines Sulfonylharnstoffes der Formel IIb enthält,

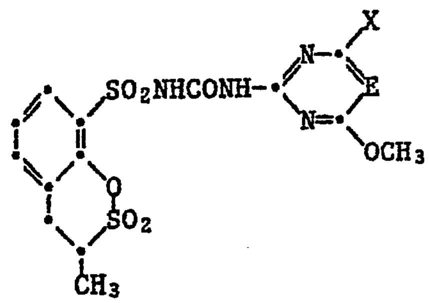 (IIb)

worin E und X die im Anspruch 1 gegebene Bedeutung haben.

9. Mittel gemäß Anspruch 1, dadurch gekennzeichnet, daß es neben inerten Zutaten als Wirkstoffkomponente a) eines der Cyclohexandioncarbonsäurederivate
4-(Cyclopropylcarbonyl)-cyclohexan-3,5-dion-1-carbonsäure-äthylester,
4-(Cyclopropylcarbonyl)-cyclohexan-3,5-dion-1-carbonsäure,
4-(Cyclopropylcarbonyl)-cyclohexan-3,5-dion-1-carbonsäure-methylester oder
4-(Cyclobutylcarbonyl)-cyclohexan-3,5-dion-1-carbonsäure
und b) eine synergistisch wirksame Menge eines der Phenylharnstoffe
N-(2-β-Chloräthoxyphenylsulfonyl)-N'-(4-methoxy-6-methyl-1,3,5-triazin-2-yl)harnstoff,
N-[2-(2-Methoxyäthoxy)phenylsulfonyl]-N'-(4-methoxy-6-methyl-1,3,5-triazin-2-yl)harnstoff,
N-(2-Methoxycarbonylphenylsulfonyl)-N'-(4,6-bis-difluormethoxy-pyrimidin-2-yl)harnstoff,
N-[2-(2-Methoxyäthoxy)phenylsulfonyl]-N'-(4,6-dimethoxy-1,3,5-triazin-2-yl)harnstoff,
N-(2-Methoxycarbonylphenylsulfonyl)-N'-(4-cyclopropyl-6-methyl-pyrimidin-2-yl)harnstoff,
N-(2,2-Dioxo-3-methyl-1,2-benzthioxin-8-yl-sulfonyl)-N'-(4-methoxy-6-methyl-pyrimidin-2-yl)-harnstoff,
N-(2-Chlorophenylsulfonyl)-N'-(4-methoxy-6-methyl-1,3,5-triazin-2-yl)harnstoff,
N-(2-Methoxycarbonylphenylsulfonyl)-N'-(4-methoxy-6-methyl-1,3,5-triazin-2-yl)harnstoff,
N-(2-Methoxycarbonylphenylsulfonyl)-N'-(4,6-dimethyl-pyrimidin-2-yl)harnstoff,
N-(2-Methoxycarbonyl-thien-3-ylsulfonyl)-N'-(4-methoxy-6-methyl-1,3,5-triazin-2-yl)harnstoff,
N-(2-Äthoxycarbonylphenylsulfonyl)-N'-(4-chlor-6-methoxy-pyrimidin-2-yl)harnstoff, oder
N-(2-Methoxycarbonylphenylsulfonyl)-N'-(4,6-dimethoxy-pyrimidin-2-yl)harnstoff enthält.

10. Mittel gemäß Anspruch 1, dadurch gekennzeichnet, daß es neben inerten Zutaten als Wirkstoffkomponenten a) 4-(Cyclopropylcarbonyl)-3,5-cyclohexan-dion-1-carbonsäure-äthylester und b) eine synergistisch wirksame Menge von N-(2-β-chloräthoxyphenylsulfonyl)-N'-(4-methoxy-6-methyl-1,3,5-triazin-2-yl)harnstoff enthält.

11. Mittel gemäß Anspruch 1, dadurch gekennzeichnet, daß es neben inerten Zutaten als Wirkstoffkomponente a) 4-(Cyclopropylcarbonyl)-cyclohexan-3,5-dion-1-carbonsäureäthylester und b) eine synergistisch wirksame Menge von N-(2-β-Methoxyäthoxy-phenylsulfonyl)-N'-(4,6-dimethoxy-1,3,5-triazin-2-yl)harnstoff enthält.

12. Mittel gemäß einem der Ansprüche 1 bis 11 enthaltend die Wirkstoffkomponenten I und II im Verhältnis von 200:1 bis 1:1, vorzugsweise ein Verhältnis 100:1 bis 10:1.

13. Verfahren zur Regulierung des Pflanzenwuchses, dadurch gekennzeichnet, daß man Pflanzen, Pflanzenteile oder Samen mit einer wirksamen Menge des Mittels gemäß einem der Ansprüche 1 bis 12, behandelt.

14. Verwendung des Mittels gemäss einem der Ansprüche 1 bis 12 zur Hemmung des Wachstums von Gräsern, Vegetationsmischungen und Unkräutern.

15. Verfahren zur Hemmung des Wachstums von Gräsern, Vegetationsmischungen und Unkräutern, dadurch gekennzeichnet, dass man eine wirksame Menge des Mittels gemäss einem der Ansprüche 1 bis 12 auf eine mit Gräsern und/oder Unkräutern bewachsene Fläche appliziert.

16. Die Verwendung des Mittels gemäss Anspruch 14 zur Unterdrückung des Pflanzenwachstums über das 2-Blattstadium hinaus, dadurch gekennzeichnet, dass das Mittel pre-emergent appliziert wird.

17. Die Verwendung des Mittels gemäss einem der Ansprüche 1 bis 12 in Zuckerrohr-, Getreide-, Mais-, Soja-, Obst-, Reis- oder Baumwollkulturen oder bei Bodenbedecker-Leguminosen.

18. Verwendung des Mittels gemäss einem der Ansprüche 1 bis 12 zur Wuchshemmung im Sinne einer Erhöhung der Knickfestigkeit und Halmverkürzung bei Getreidesorten.

19. Verwendung des Mittels gemäss Anspruch 18, zur Wuchshemmung, im Sinne einer Erhöhung der Knickfestigkeit und Halmverkürzung bei den Getreidesorten Hafer, Weizen, Gerste oder Roggen.

**Claims**

1. A plant growth regulating composition, which contains as active components

a) a cyclohexanedionecarboxylic acid derivative of the formula I

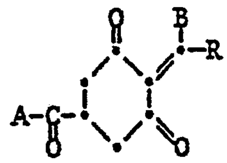

(I)

wherein

A is an $OR_2$ or $NR_3R_4$ radical,

B is hydroxyl, an $-NHOR_1$ radical or a metal salt or ammonium salt thereof,

R is $C_1$–$C_6$alkyl or $C_3$–$C_6$cycloalkyl, each unsubstituted or substituted by halogen, $C_1$–$C_4$alkoxy or $C_1$–$C_4$alkylthio,

$R_1$ is $C_1$–$C_6$alkyl, $C_1$–$C_6$haloalkyl, $C_3$–$C_6$alkenyl, $C_3$–$C_6$haloalkenyl or $C_3$–$C_6$alkynyl,

$R_2$, $R_3$ and $R_4$ are each independently hydrogen; $C_1$–$C_6$alkyl, $C_1$–$C_6$haloalkyl, $C_2$–$C_{10}$alkoxyalkyl, $C_2$–$C_{10}$alkylthioalkyl; $C_3$–$C_6$alkenyl which is unsubstituted or substituted by halogen, $C_1$–$C_4$alkoxy or $C_1$–$C_4$alkylthio; $C_3$–$C_6$alkynyl; phenyl or aryl-($C_1$–$C_6$)-alkyl, the phenyl nucleus being unsubstituted or substituted by halogen, $C_1$–$C_4$alkyl, $C_1$–$C_4$alkoxy, $C_1$–$C_4$haloalkyl, nitro or cyano, one of $R_3$ and $R_4$ is also methoxy or

$R_3$ and $R_4$, together with the nitrogen atom to which they are attached, also form a 5- or 6-membered saturated heterocycle which may contain an oxygen atom or a further nitrogen atom in the ring, and

b) a synergistically effective amount of a sulfonylurea of the formula II

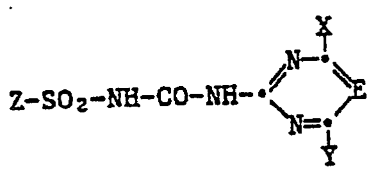

(II)

or of a salt thereof, wherein

Z is a radical

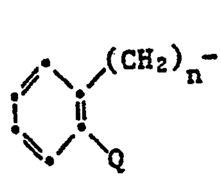 , 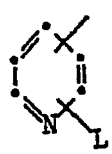 , 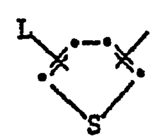 or 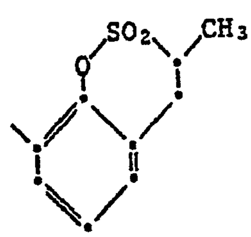

L is halogen, nitro, $-SO_2(CH_3)_2$, $C_1$–$C_5$alkoxycarbonyl, $C_1$–$C_5$alkyl, $C_1$–$C_5$alkoxy, $C_1$–$C_5$alkylthio or $C_1$–$C_5$alkylsulfonyl,

Q is halogen, nitro, $-SO_2N(CH_3)_2$, $-CO-R^1$, $-(A)_m-R^2$, phenyl, phenoxy, $C_1$–$C_5$alkyl, halophenyl, halophenoxy, $C_1$–$C_5$haloalkoxy, $C_1$–$C_5$haloalkylthio or $C_1$–$C_5$haloalkyl,

n is 0 or 1,

E is N or CH,

X is methyl, methoxy, ethoxy, difluoromethoxy or cyclopropyl and

Y is chlorine, methyl, methoxy, difluoromethoxy, methylamino, dimethylamino or ethoxy, and
$R^1$ is hydrogen, $C_1$–$C_5$alkyl, $C_1$–$C_5$alkoxy, $C_3$–$C_5$alkenyloxy or $C_3$–$C_5$alkynyloxy,
A is oxygen, sulfur, –SO–, $SO_2$– or –O–$SO_2$–,
m is 0 or 1 and
$R^2$ is $C_1$–$C_5$alkyl, $C_2$–$C_5$alkenyl, $C_2$–$C_5$alkynyl, $C_1$–$C_5$haloalkyl, $C_2$–$C_7$alkoxyalkyl, $C_2$–$C_5$haloalkenyl or $C_2$–$C_5$haloalkynyl
together with inert adjuvants.

2. A composition according to claim 1, which contains a cyclohexanedionecarboxylic acid derivative of the formula Ia

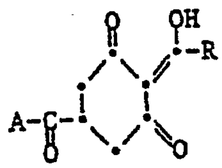

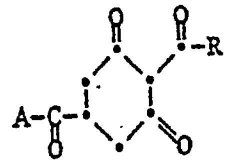

(Ia)

wherein A and R are as defined in claim 1.

3. A composition according to claim 1, which contains a cyclohexanedionecarboxylic acid derivative of the formula Ia

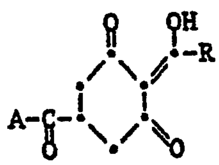

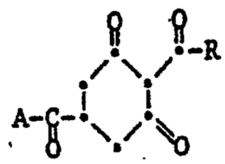

(Ia)

wherein A is the acid radical –OH or an ester radical –$OR_2$ and $R_2$ is as defined in claim 1 and R is a $C_3$–$C_6$cycloalkyl radical.

4. A composition according to claim 1, which contains a phenylsulfonylurea of the formula IIa

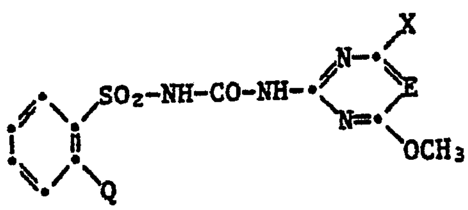

(IIa)

wherein
E is N or CH,
X is methyl, methoxy or cyclopropyl,
Q is halogen, –$SO_2N(CH_3)_2$, or a –CO–$R_1$ or –$(A)_mR_2$ radical,
$R_1$ is hydrogen, $C_1$–$C_5$alkyl, $C_1$–$C_5$alkoxy, $C_3$–$C_5$alkenyloxy or $C_3$–$C_5$alkynyloxy,
A is oxygen, sulfur, –SO–, –$SO_2$– or –$OSO_2$–,
m is 0 or 1,
$R_2$ is $C_1$–$C_5$alkyl, $C_2$–$C_5$alkenyl, $C_2$–$C_5$alkynyl, $C_1$–$C_5$haloalkyl, $C_2$–$C_7$alkoxyalkyl, $C_2$–$C_5$haloalkenyl or $C_2$–$C_5$haloalkynyl.

5. A composition according to claim 1, which contains a sulfonylurea of the formula IIa

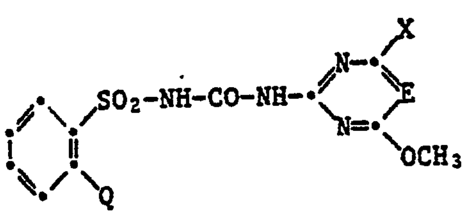

(IIa)

wherein E is N and X is methyl, methoxy or the cyclopropyl group, Q is halogen, dimethylsulfamoyl –$SO_2N(CH_3)_2$, or a –CO–$R_1$ or –$(A)_mR_2$ radical, $R_1$ is hydrogen, $C_1$–$C_5$alkyl, $C_1$–$C_5$alkoxy, $C_3$–$C_5$-alkenyloxy or $C_3$–$C_5$alkynyloxy, m is 0 or 1, $R_2$ is $C_1$–$C_5$alkyl, $C_2$–$C_5$alkenyl, $C_2$–$C_5$alkynyl, $C_1$–$C_5$-haloalkyl, $C_2$–$C_7$alkoxyalkyl, $C_2$–$C_5$haloalkenyl or $C_2$–$C_5$haloalkynyl.

6. A composition according to claim 1, wherein the sulfonylurea is of the formula IIb

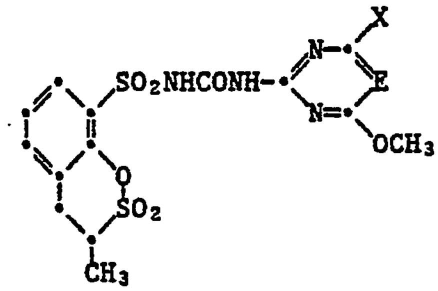

(IIb)

7. A composition according to claim 1, which contains as active components
a) a cyclohexanedionecarboxylic acid derivative of the formula Ia

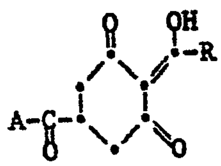

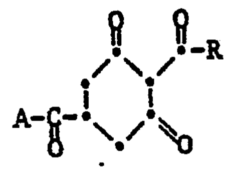

(Ia)

wherein A and R are as defined in claim 1 and
b) a synergistically effective amount of a sulfonylurea of the formula IIa

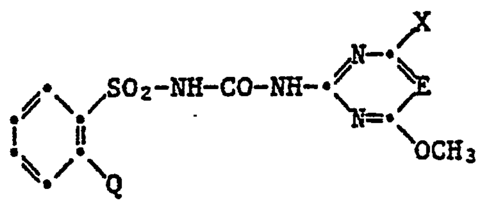

(IIa)

wherein
E is N or CH,
X is methyl, methoxy or cyclopropyl,
Q is halogen, $-SO_2N(CH_3)_2$, or a $-CO-R_1$ or $-(A)_mR_2$ radical,
$R_1$ is hydrogen, $C_1$–$C_5$alkyl, $C_1$–$C_5$alkoxy, $C_3$–$C_5$alkenyloxy or $C_3$–$C_5$alkynyloxy,
A is oxygen, sulfur, $-SO-$, $-SO_2-$ or $-OSO_2-$,
m is 0 or 1,
$R_2$ is $C_1$–$C_5$alkyl, $C_2$–$C_5$alkenyl, $C_2$–$C_5$alkynyl, $C_1$–$C_5$haloalkyl, $C_2$–$C_7$alkoxyalkyl, $C_2$–$C_5$haloalkenyl or $C_2$–$C_5$haloalkynyl,
together with inert adjuvants.

8. A composition according to claim 1, which contains as active components
a) a cyclohexanedionecarboxylic acid derivative of the formula Ia

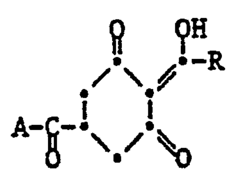

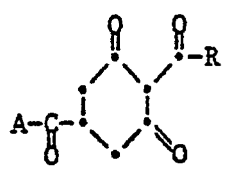

(Ia)

wherein A is the acid radical $-OH$ or an ester radical $-OR_2$, in which $R_2$ is as defined in claim 1, and R is a $C_3$–$C_6$cycloalkyl radical and
b) a synergistically effective amount of a sulfonylurea of the formula IIb

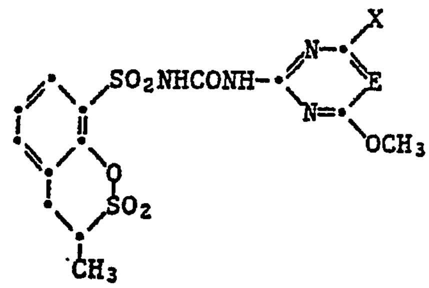

(IIb)

wherein E and X are as defined in claim 1, together with inert adjuvants.

9. A composition according to claim 1, which contains as active components
a) one of the cyclohexanedionecarboxylic acid derivatives
ethyl 4-(cyclopropylcarbonyl)cyclohexane-3,5-dione-1-carboxylate,
4-(cyclopropylcarbonyl)cyclohexane-3,5-dione-1-carboxylic acid,
methyl 4-(cyclopropylcarbonyl)cyclohexane-3,5-dione-1-carboxylate or
4-(cyclobutylcarbonyl)cyclohexane-3,5-dione-1-carboxylic acid and
b) a synergistically effective amount of one of the phenylureas
N-(2-β-chloroethoxyphenylsulfonyl)-N'-(4-methoxy-6-methyl-1,3,5-triazin-2-yl)urea,
N-[2-(2-methoxyethoxy)phenylsulfonyl]-N'-(4-methoxy-6-methyl-1,3,5-triazin-2-yl)urea,
N-(2-methoxycarbonylphenylsulfonyl)-N'-(4,6-bisdifluoromethoxypyrimidin-2-yl)urea,
N-[2-(2-methoxyethoxy)phenylsulfonyl]-N'-(4,6-dimethoxy-1,3,5-triazin-2-yl)urea,
N-(2-methoxycarbonylphenylsulfonyl)-N'-(4-cyclopropyl-6-methylpyrimidin-2-yl)urea,
N-(2,2-dioxo-3-methyl-1,2-benzothioxin-8-ylsulfonyl)-N'-(4-methoxy-6-methylpyrimidin-2-yl)urea,
N-(2-chlorophenylsulfonyl)-N'-(4-methoxy-6-methyl-1,3,5-triazin-2-yl)urea,
N-(2-methoxycarbonylphenylsulfonyl)-N'-(4-methoxy-6-methyl-1,3,5-triazin-2-yl)urea,
N-(2-methoxycarbonylphenylsulfonyl)-N'-(4,6-dimethylpyrimidin-2-yl)urea,
N-(2-methoxycarbonylthien-3-ylsulfonyl)-N'-(4-methoxy-6-methyl-1,3,5-triazin-2-yl)urea,
N-(2-ethoxycarbonylphenylsulfonyl)-N'-(4-chloro-6-methoxypyrimidin-2-yl)urea, or
N-(2-methoxycarbonylphenylsulfonyl)-N'-(4,6-dimethoxypyrimidin-2-yl)urea,
together with inert adjuvants.

10. A composition according to claim 1, which contains as active components a) ethyl 4-(cyclopropylcarbonyl)cyclohexane-3,5-dione-1-carboxylate and b) a synergistically effective amount of N-(2-β-chloroethoxyphenylsulfonyl)-N'-(4-methoxy-6-methyl-1,3,5-triazin-2-yl)urea, together with inert adjuvants.

11. A composition according to claim 1, which contains as active components a) ethyl 4-(cyclopropylcarbonyl)cyclohexane-3,5-dione-1-carboxylate and b) a synergistically effective amount of N-(2-β-methoxyethoxy-phenylsulfonyl)-N'-(4,6-dimethoxy-1,3,5-triazin-2-yl)urea, together with inert adjuvants.

12. A composition according to any one of claims 1 to 11, which contains the active components I and II in a ratio in the range from 200:1 to 1:1, preferably in a ratio in the range from 100:1 to 10:1.

13. A method of regulating plant growth, which method comprises treating plants, parts of plants, or seeds with an effective amount of the composition according to any one of claims 1 to 12.

14. Use of the composition according to any one of claims 1 to 12 for inhibiting the growth of grasses, mixed vegetation and weeds.

15. A method of inhibiting the growth of grasses, mixed vegetation and weeds, which method comprises applying to an area covered in grass and/or weeds an effective amount of the composition according to any one of claims 1 to 12.

16. The use of the composition according to claim 14 for suppressing the growth of plants beyond the 2-leaf stage, which method comprises applying the composition preemergence.

17. The use of the composition according to any one of claims 1 to 12 in crops of sugar cane, cereals, maize, soybeans, fruit, rice and cotton, or in leguminous cover crops.

18. Use of the composition according to any one of claims 1 to 12 for inhibiting growth in the sense of increasing resistance to lodging and shortening the stalks in crops of cereals.

19. Use of the composition according to claim 18 for inhibiting growth in the sense of increasing resistance to lodging and shortening the stalks of oats, wheat, barley or rye as the cereal crops.

**Revendications**

1. Un produit régulateur de la croissance des végétaux, caractérisé en ce qu'il contient en tant que composants actifs, avec des additifs inertes,

a) un dérivé d'acide cyclohexane-dione-carboxylique de formule I

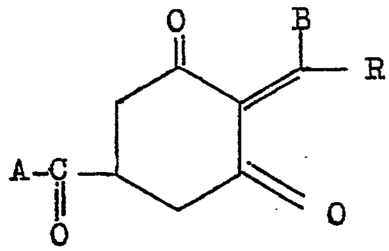

(I),

dans laquelle

A représente un groupe $OR_2$ ou $NR_3R_4$,

B représente un groupe hydroxy, $-NHOR_1$ ou un sel métallique ou d'ammonium d'un tel groupe,

R représente un groupe alkyle en $C_1$–$C_6$ ou cycloalkyle en $C_3$–$C_6$, non substitué ou substitué par des halogènes, des groupes alcoxy en $C_1$–$C_4$ ou alkylthio en $C_1$–$C_4$,

$R_1$ représente un groupe alkyle en $C_1$–$C_6$, halogénoalkyle en $C_1$–$C_6$, alcényle en $C_3$–$C_6$, halogénoalcényle en $C_3$–$C_6$ ou alcynyle en $C_3$–$C_6$,

$R_2$, $R_3$ et $R_4$ représentent chacun, indépendamment les uns des autres, l'hydrogène; un groupe alkyle en $C_1$–$C_6$, halogénoalkyle en $C_1$–$C_6$, alcoxyalkyle en $C_2$–$C_{10}$, alkylthioalkyle en $C_2$–$C_{10}$; un groupe alcényle en $C_3$–$C_6$, non substitué ou substitué par des halogènes, des groupes alcoxy en $C_1$–$C_4$ ou alkylthio en $C_1$–$C_4$; un groupe alcynyle en $C_3$–$C_6$; un groupe phényle ou arylalkyle en $C_1$–$C_6$ dans lesquels le noyau phényle peut être non substitué ou substitué par des halogènes, des groupes alkyle en $C_1$–$C_4$, alcoxy en $C_1$–$C_4$, halogénoalkyle en $C_1$–$C_4$, nitro ou cyano, l'un des symboles $R_3$ et $R_4$ pouvant également représenter un groupe méthoxy, ou bien

$R_3$ et $R_4$ forment ensemble et avec l'atome d'azote auquel ils sont reliés un hétérocycle saturé de 5 à 6 chaînons qui peut contenir dans le cycle un atome d'oxygène ou un autre atome d'azote, et

b) une quantité synergétique active d'une sulfonylurée de formule II

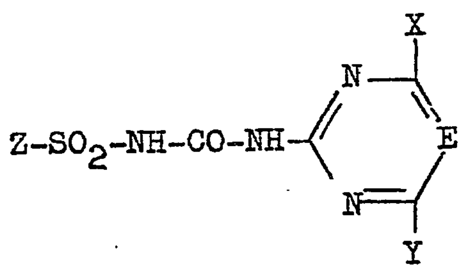

(II)

ou d'un sel d'un tel composé, pour lequel

Z représente un groupe

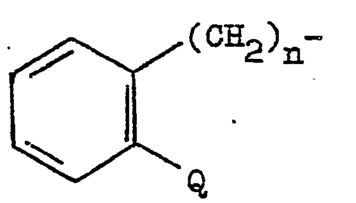

,

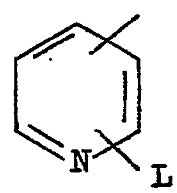

,

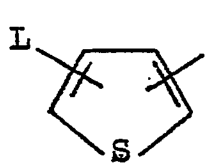

ou

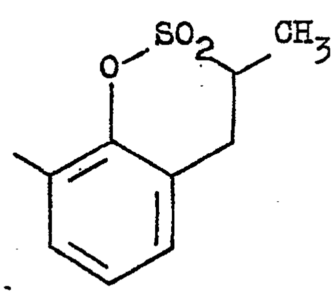

L représente un halogène, un groupe nitro, $-SO_2N(CH_3)_2$, (alcoxy en $C_1$–$C_5$)-carbonyle, alkyle en $C_1$–$C_5$, alcoxy en $C_1$–$C_5$, alkylthio en $C_1$–$C_5$ ou alkylsulfonyle en $C_1$–$C_5$,

Q représente un halogène, un groupe nitro, $-SO_2N(CH_3)_2$, $-CO-R_1$, $-(A)_m-R_2$, phényle, phénoxy, alkyle en $C_1-C_5$, halogénophényle, halogénophénoxy, halogénoalcoxy en $C_1-C_5$, halogénoalkylthio en $C_1-C_5$ ou halogénoalkyle en $C_1-C_5$,
n est égal à 0 ou 1,
E représente N ou CH,
X représente un groupe méthyle, méthoxy, éthoxy, difluorométhoxy ou cyclopropyle et
Y représente le chlore, un groupe méthyle, méthoxy, difluorométhoxy ou méthylamino, diméthylamino, éthoxy, et
$R^1$ représente l'hydrogène, un groupe alkyle en $C_1-C_5$, alcoxy en $C_1-C_5$, alcényloxy en $C_3-C_5$ ou alcynyloxy en $C_3-C_5$,
A représente l'oxygène, le soufre, un groupe $-SO-$, $-SO_2-$ ou $-O-SO_2-$,
m est égal à 0 ou 1 et
$R^2$ représente un groupe alkyle en $C_1-C_5$, alcényle en $C_2-C_5$, alcynyle en $C_2-C_5$, halogénoalkyle en $C_1-C_5$, alcoxyalkyle en $C_2-C_7$, halogénoalcényle en $C_2-C_5$ ou halogénoalcynyle en $C_2-C_5$.

2. Produit selon la revendication 1, caractérisé en ce qu'il contient un dérivé d'acide cyclohexane-dione-carboxylique de formule Ia

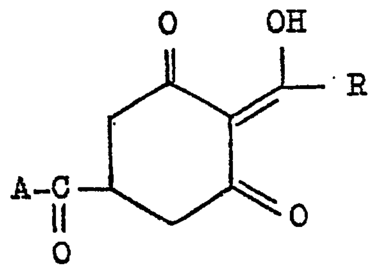
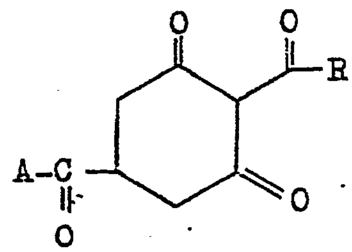
(Ia)

dans laquelle A et R ont les significations indiquées dans la revendication 1.

3. Produit selon la revendication 1, caractérisé en ce qu'il contient un dérivé d'acide cyclohexane-dione-carboxylique de formule Ia

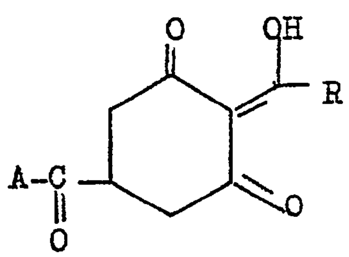
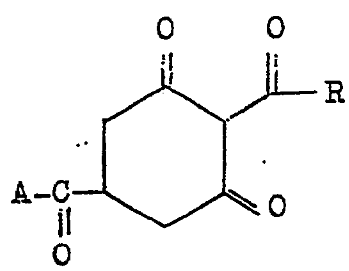
(Ia),

dans laquelle A représente le radical acide $-OH$ ou un radical d'ester $-OR_2$ et $R_2$ a les significations indiquées dans la revendication 1 et R représente un groupe cycloalkyle en $C_3-C_6$.

4. Produit selon la revendication 1, caractérisé en ce qu'il contient une phénylsulfonylurée de formule IIa

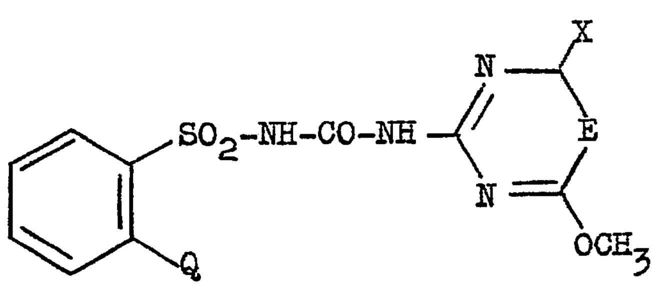
(IIa),

dans laquelle
E représente N ou CH,
X représente un groupe méthyle, méthoxy ou cyclopropyle,
Q représente un halogène, un groupe $-SO_2H(CH_3)_2$, $-CO-R_1$ ou $-(A)_mR_2$,

$R_1$ représente l'hydrogène, un groupe alkyle en $C_1$–$C_5$, alcoxy en $C_1$–$C_5$, alcényloxy en $C_3$–$C_5$ ou alcynyloxy en $C_3$–$C_5$,
A représente l'oxygène, le soufre, un groupe $-SO-$, $-SO_2-$ ou $-OSO_2-$,
m est égal à 0 ou 1,
$R_2$ représente un groupe alkyle en $C_1$–$C_5$, alcényle en $C_2$–$C_5$, alcynyle en $C_2$–$C_5$, halogénoalkyle en $C_1$–$C_5$, alcoxyalkyle en $C_2$–$C_7$, halogénoalcényle en $C_2$–$C_5$ ou halogénoalcynyle en $C_2$–$C_5$.

5. Produit selon la revendication 1, caractérisé en ce qu'il contient une sulfonylurée de formule IIa

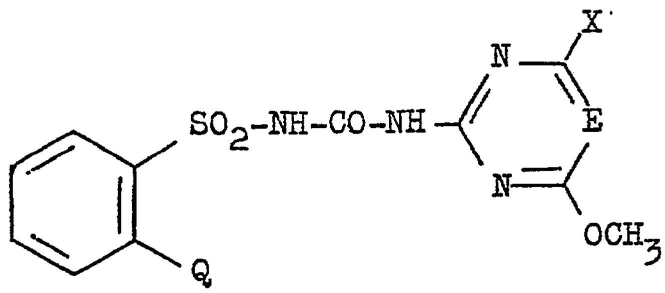

(IIa)

dans laquelle E représente N et X représente un groupe méthyle, méthoxy ou cyclopropyle, Q représente un halogène, un groupe diméthylsulfamoyle $-SO_2N(CH_3)_2$, un groupe $-CO-R_1$ ou $-(A)_mR_2$, $R_1$ représente l'hydrogène, un groupe alkyle en $C_1$–$C_5$, alcoxy en $C_1$–$C_5$, alcényloxy en $C_3$–$C_5$ ou alcynyloxy en $C_3$–$C_5$, m est égal à 0 ou 1, $R_2$ représente un groupe alkyle en $C_1$–$C_5$, alcényle en $C_2$–$C_5$, alcynyle en $C_2$–$C_5$, halogénoalkyle en $C_1$–$C_5$, alcoxyalkyle en $C_2$–$C_7$, halogénoalcényle en $C_2$–$C_5$ ou halogénoalcynyle en $C_2$–$C_5$.

6. Produit selon la revendication 1, caractérisé en ce que la sulfonylurée répond à la formule IIb

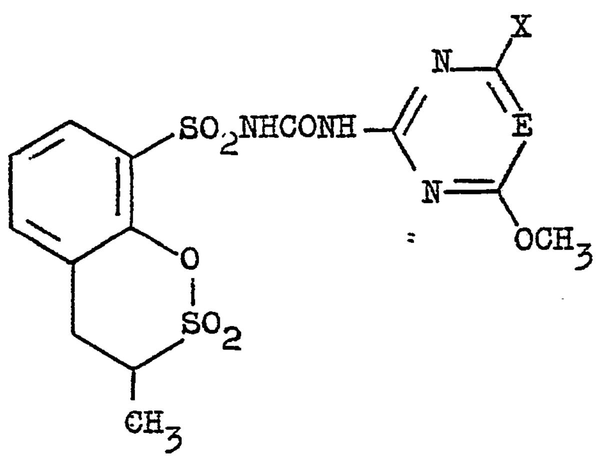

(IIb)

7. Produit selon la revendication 1, caractérisé en ce qu'il contient en tant que composants actifs, avec des additifs inertes

a) un dérivé d'acide cyclohexane-dione-carboxylique de formule Ia

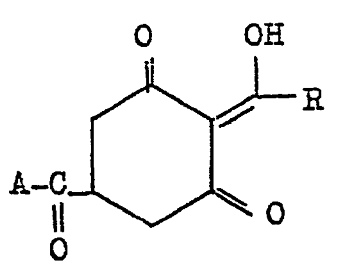

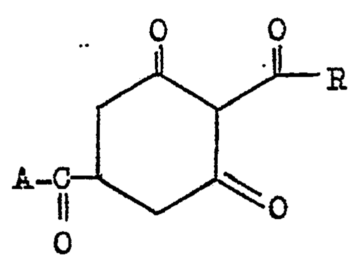

(Ia)

dans laquelle A et R ont les significations indiquées dans la revendication 1 et

b) une quantité synergétique active d'une sulfonylurée de formule IIa

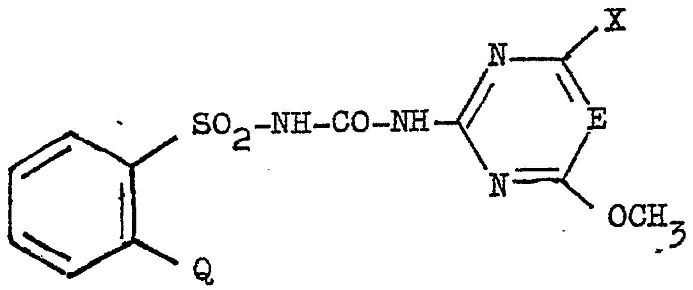

(IIa)

dans laquelle
E représente N ou CH,
X représente un groupe méthyle, méthoxy ou cyclopropyle,
Q représente un halogène, un groupe $-SO_2N(CH_3)_2$, $-CO-R_1$ ou $(A)_mR_2$,
$R_1$ représente l'hydrogène, un groupe alkyle en $C_1-C_5$, alcoxy en $C_1-C_5$, alcényloxy en $C_3-C_5$ ou alcynyloxy en $C_3-C_5$,
A représente l'oxygène, le soufre, un groupe $-SO-$, $-SO_2-$ ou $-OSO_2-$,
m est égal à 0 ou 1,
$R_2$ représente un groupe alkyle en $C_1-C_5$, alcényle en $C_2-C_5$, alcynyle en $C_2-C_5$, halogénoalkyle en $C_1-C_5$, alcoxyalkyle en $C_2-C_7$, halogénoalcényle en $C_2-C_5$ ou halogénoalcynyle en $C_2-C_5$.

8. Produit selon la revendication 1, caractérisé en ce qu'il contient en tant que composants actifs, avec des additifs inertes,

a) un dérivé d'acide cyclohexane-dione-carboxylique de formule Ia

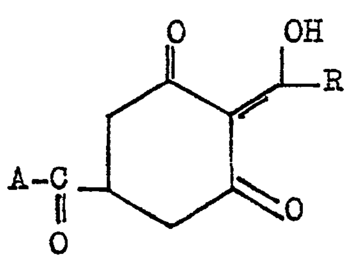

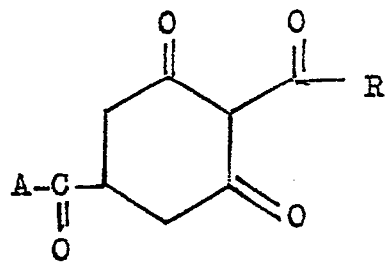

(Ia)

dans laquelle A représente le radical acide $-OH$ ou un radical d'ester $-OR_2$ dans lequel $R_2$ a les significations indiquées dans la revendication 1, et R représente un groupe cycloalkyle en $C_3-C_6$ et

b) une quantité synergétique active d'une sulfonylurée de formule IIb

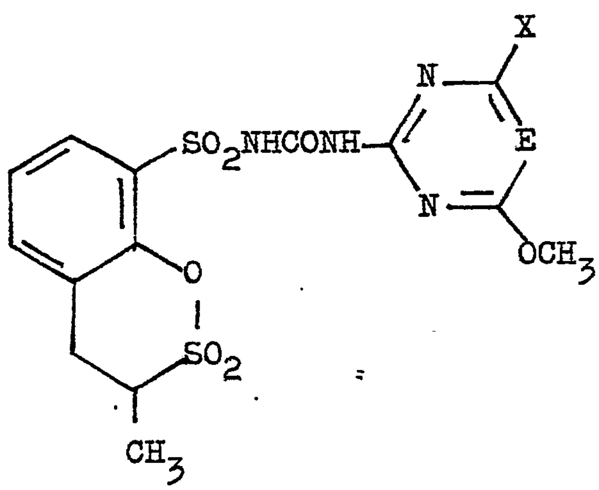

(IIb)

dans laquelle E et X ont les significations indiquées dans la revendication 1.

9. Produit selon la revendication 1, caractérisé en ce qu'il contient en tant que composant actif a), avec des additifs inertes, l'un des dérivés d'acides cyclohexane-dione-carboxyliques ci-après:
– 4-(cyclopropylcarbonyl)-cyclohexane-3,5-dione-1-carboxylate d'éthyle,
– acide 4-(cyclopropylcarbonyl)-cyclohexane-2,5-dione-1-carboxylique,

– 4-(cyclopropyl-carbonyl)-cyclohexane-3,5-dione-1-carboxylate de méthyle ou
– acide 4-(cyclobutylcarbonyl)-cyclohexane-3,5-dione-1-carboxylique et
b) une quantité synergétique active de l'une des phénylurées ci-après:
– N-(2-bêta-chloréthoxyphénylsulfonyl)-N'-(4-méthoxy-6-méthyl-1,3,5-triazine-2-yl)-urée,
– N-[2-(2-méthoxyéthoxy)-phénylsulfonyl]-N'-(4-méthoxy-6-méthyl-1,3,5-triazine-2-yl)-urée,
– N-(2-méthoxycarbonylphénylsulfonyl)-N'-(4,6-bis-difluorométhoxypyrimidine-2-yl)-urée,
– N-[2-(2-méthoxyéthoxy)-phénylsulfonyl]-N'-(4,6-diméthoxy-1,3,5-triazine-2-yl)-urée,
– N-(2-méthoxycarbonylphénylsulfonyl)-N'-(4-cyclopropyl-6-méthylpyrimidine-2-yl)-urée,
– N-(2,2-dioxo-3-méthyl-1,2-benzothioxine-8-yl-sulfonyl)-N'-(4-méthoxy-6-méthylpyrimidine-2-yl)-urée,
– N-(2-chlorophénylsulfonyl)-N'-(4-méthoxy-6-méthyl-1,3,5-triazine-2-yl)-urée,
– N-(2-méthoxycarbonylphénylsulfonyl)-N'-(4-méthoxy-6-méthyl-1,3,5-triazine-2-yl)-urée,
– N-(2-méthoxycarbonylphénylsulfonyl)-N'-(4,6-diméthylpyrimidine-2-yl)-urée,
– N-(2-méthoxycarbonyl-thiène-3-ylsulfonyl)-N'-(4-méthoxy-6-méthyl-1,3,5-triazine-2-yl)-urée,
– N-(2-éthoxycarbonylphénylsulfonyl)-N'-(4-chloro-6-méthoxypyrimidine-2-yl)-urée ou
– N-(2-méthoxycarbonylphénylsulfonyl)-N'-(4,6-diméthoxypyrimidine-2-yl)-urée.

10. Produit selon la revendication 1, caractérisé en ce qu'il contient en tant que composants actifs, avec des additifs inertes, a) le 4-(cyclopropylcarbonyl)-3,5-cyclohexane-dione-1-carboxylate d'éthyle et b) une quantité synergétique active de N-(2-bêta-chlor-éthoxyphényl-sulfonyl)-N'-(4-méthoxy-6-méthyl-1,3,5-triazine-2-yl)-urée.

11. Produit selon la revendication 1, caractérisé en ce qu'il contient en tant que composants actifs, avec des additifs inertes, a) le 4-(cyclopropylcarbonyl)-cyclohexane-3,5-dione-1-carboxylate d'éthyle et b) une quantité synergétique active de N-(2-bêta-méthoxyéthoxyphényl-sulfonyl)-N'-(4,6-diméthoxy-1,3,5-triazine-2-yl)-urée.

12. Produit selon l'une des revendications 1 à 11, contenant les composants actifs I et II dans les proportions relatives de 200:1 à 1:1, de préférence de 100:1 à 10:1.

13. Procédé pour la régulation de la croissance des végétaux, caractérisé en ce que l'on traite les végétaux, des parties des végétaux ou les graines des végétaux par une quantité efficace du produit selon l'une des revendications 1 à 12.

14. Utilisation du produit selon l'une des revendications 1 à 12 pour l'inhibition de la croissance des graminées, des végétations mélangées et des végétaux adventices.

15. Procédé pour inhiber la croissance des graminées, des végétations mélangées et des végétaux adventices, caractérisé en ce que l'on applique une quantité efficace du produit selon l'une des revendications 1 à 12 sur l'aire occupée par les graminées et/ou les végétaux adventices.

16. L'utilisation du produit selon la revendication 14 pour l'inhibition de la croissance des végétaux au delà du stade deux feuilles, caractérisée en ce qu'on applique le produit en pré-levée.

17. L'utilisation du produit selon l'une des revendications 1 à 12 dans les cultures de cannes à sucre, de céréales, de maïs, de soya, de fruits, de riz ou de coton ou sur les légumineuses de couvertures de sol.

18. Utilisation du produit selon l'une des revendications 1 à 12 pour l'inhibition de la croissance dans le sens d'une augmentation de la résistance au couchage et d'un raccourcissement de la tige sur les céréales.

19. Utilisation du produit selon la revendication 18 pour l'inhibition de la croissance dans le sens d'une augmentation de la résistance au couchage et d'un raccourcissement de la tige sur les céréales, avoine, blé, orge ou seigle.